# Europäisches Patentamt
## European Patent Office
## Office européen des brevets

(11) Veröffentlichungsnummer: **0 090 807**
**B1**

(12) **EUROPÄISCHE PATENTSCHRIFT**

(45) Veröffentlichungstag der Patentschrift:
**09.04.86**

(21) Anmeldenummer: **82900960.4**

(22) Anmeldetag: **02.04.82**

(86) Internationale Anmeldenummer:
**PCT/EP 82/00077**

(87) Internationale Veröffentlichungsnummer:
**WO 82/04107 (25.11.82 Gazette 82/28)**

(51) Int. Cl.⁴: **F 16 D 43/284**

(54) **SCHALTKUPPLUNG, DIE DURCH EINEN FLIEHKRAFTABHÄNGIGEN FLÜSSIGKEITSDRUCK BETÄTIGBAR IST.**

(30) Priorität: **14.05.81 DE 3119171**

(43) Veröffentlichungstag der Anmeldung:
**12.10.83 Patentblatt 83/41**

(45) Bekanntmachung des Hinweises auf die Patenterteilung:
**09.04.86 Patentblatt 86/15**

(84) Benannte Vertragsstaaten:
**AT BE CH DE FR GB LI NL SE**

(56) Entgegenhaltungen:
**DE - C - 89 363**
**GB - A - 623 003**
**GB - A - 627 487**
**GB - A - 971 639**
**US - A - 2 210 416**
**US - A - 2 771 976**
**US - A - 4 004 670**
**US - A - 4 238 020**

(73) Patentinhaber: **VOITH TURBO GMBH & CO. KG,**
**Voithstr. 1, D-7180 Crailsheim (DE)**

(72) Erfinder: **DUMINY, Jacques, Brunnenstrasse 41,**
**D-7180 Craislheim (DE)**

(74) Vertreter: **Weitzel, Wolfgang, Dr.-Ing., St. Pöltener**
**Strasse 43, D-7920 Heidenheim (DE)**

LIBER, STOCKHOLM 1986

## Beschreibung

Die Erfindung betrifft eine Schaltkupplung, die zwei Kupplungshälften hat, durch einen fliehkraftabhängigen Flüssigkeitsdruck betätigbar ist und die folgende Merkmale aufweist:

a) mit der einen Kupplungshälfte rotieren ein die Kupplung betätigendes Schaltelement, vorzugsweise ein in Achsrichtung verschiebbarer Kolben, und ein mit Flüssigkeit füllbarer Druckraum, in dem sich beim Rotieren der fliehkraftabhängige, im Sinne des Schließens der Schaltkupplung wirkende Flüssigkeitsdruck aufbaut;

b) in der einen Kupplungshälfte ist ein Vorratsraum vorgesehen, in den Flüssigkeit beim Öffnen der Schaltkupplung aus dem Druckraum übertritt;

c) der Vorratsraum ist vom Druckraum getrennt und mit diesem über wenigstens eine Flüssigkeitsleitung verbunden.

Eine solche Schaltkupplung wird vorzugsweise zwischen einem Antriebsmotor und einer Arbeitsmaschine angeordnet. Sie ist im Stillstand und während des Anlaufens des Antriebsmotors geöffnet, so daß der Anlaufvorgang des Motors weitgehend lastfrei stattfindet und der Antriebsmotor hierdurch geschont wird. Bei Erreichen einer bestimmten Drehzahl schließt sich die Schaltkupplung selbsttätig. Vorzugsweise erfolgt dies ohne einen der Kupplung von außen zugeführten Steuerbefehl. Bei bedarf kann die Schaltkupplung mit einer hydrodynamischen Kupplung oder einem hydrodynamischen Drehmomentwandler kombiniert werden. Dies ist vor allem dann zweckmäßig, wenn die anzutreibende Arbeitsmaschine eine große Masse aufweist. Hierbei findet die Kraftübertragung während des Anlaufvorganges der Arbeitsmaschine zunächst vorzugsweise rein hydrodynamisch statt. Die Schaltkupplung wird dann erst nach Abschluß des Anlaufvorganges der Arbeitsmaschine eingerückt. Hierbei werden die Primär- und die Sekundärseite der hydrodynamischen Einheit miteinander verbunden wodurch ein Betrieb ohne den hydrodynamisch bedingten Schlupf gewährleistet ist.

Stand der Technik:
1. DE-C- 89 363
2. US-A- 2 210 416
3. DE-U- 1 975 540
4. US-A- 4 238 020
5. GB-A- 623 003

Die Druckschrift 1 beschreibt eine Schaltkupplung, welche die eingangs genannten Merkmale a) bis c) aufweist und bei welcher der Vorratsraum näher an der Kupplungsdrehachse als der Druckraum angeordnet ist. Der radial äußere Bereich des Druckraumes ist frei von Öffnungen; d.h. er ist gegenüber seiner Umgebung ständig abgeschlossen. Der Druckraum und der Vorratsraum sind miteinander über eine verstellbare Drossel verbunden, die beim Schließen der Schaltkupplung die Befüllung des Druckraumes mit Flüssigkeit aus dem Vorratsraum steuert. Dabei strömt die Flüssigkeit unter Fliehkraftwirkung von der Vorratskammer in die Druckkammer. Ein Nachteil dieser bekannten Schaltkupplung besteht darin, daß sich der Druckraum bei stillstehender Kupplung niemals vollkommen entleeren kann. Hierdurch muß damit gerechnet werden, daß sich die Kupplung bei einem Anlaufvorgang im allgemeinen viel zu früh schließt. Dies gilt selbst unter Berücksichtigung des Umstandes, daß es zu Beginn des Anlaufvorganges eine gewisse Zeit dauert, bis der Flüssigkeitsinhalt des Druckraumes die Drehzahl der Kupplungshälfte, die den Druckraum umschließt, angenommen hat. Ein weiterer Nachteil ist, daß auch vom Vorratsraum aus eine drehzahlabhängige Druckkraft auf das axial bewegliche Schaltelement ausgeübt wird. Dadurch verstärkt sich noch die Tendenz des zu frühen Schließens der Kupplung.

Die Druckschrift 2 beschreibt verschiedene Schaltkupplungen, die ebenfalls die eingangs genannten Merkmale a) bis c) aufweisen. Zusätzlich ist bei diesen bekannten Schaltkupplungen, abweichend vom Gegenstand der Druckschrift 1, folgendes vorgesehen: Der Vorratsraum ist vom beweglichen Schaltelement separat angeordnet und hat einen größeren lichten Durchmesser als der Druckraum. Die Flüssigkeit bildet bei Rotation im Vorratsraum einen Flüssigkeitsring und wird mittels eines nicht rotierenden Schöpfrohres in den Druckraum gefördert. In dessen radial äußerem Bereich befindet sich eine Auslaßöffnung, durch die die Flüssigkeit in den Vorratsraum zurückströmen kann. Die Rückströmmenge ist stets kleiner als die Fördermenge des Schöpfrohres. Dadurch ist der Druckraum mit Flüssigkeit gefüllt, solange das Schöpfrohr Flüssigkeit fördert.

Auch bei diesen bekannten Schaltkupplungen besteht ein Problem darin, daß sie während des Anlaufvorganges nicht genügend lange geoffnet bleiben, weil das Schöpfrohr schon zu einem frühen Zeitpunkt den Druckraum füllt. Deshalb ist in Figur 1 der Druckschrift 2 folgendes vorgesehen: Das Schöpfrohr kann von außen her in Achsrichtung verschoben und dadurch seine Austrittsöffnung verschlossen werden. Der Zeitpunkt des Schließens der Schaltkupplung kann hierdurch zwar willkürlich bestimmt werden. Es sind jedoch zusätzliche Einrichtungen erforderlich, die einen Eingriff von außen in die Kupplung ermöglichen. Ein weiterer Nachteil besteht im folgenden: Solange das Schöpfrohr bei geschlossener Austrittsöffnung in den rotierenden Flüssigkeitsring eintaucht und hierbei aber noch nicht Flüssigkeit fördern kann, verursacht es ein verhältnismäßig hohes Verlustmoment. Letzteres trifft auch zu für das Ausführungsbeispiel gemäß Figur 5 der Druckschrift 2. Dort ist an der Austrittsöffnung des Schöpfrohres ein Schaltventil angeordnet, das zunächst mittels Federkraft geschlossen gehalten wird. Es öffnet sich erst dann, wenn sich bei Erreichen einer bestimmten Drehzahl im Schöpfrohr ein genügend hoher Flüssigkeitsdruck aufgebaut hat. Hier ist somit kein Eingriff von außen erforderlich, um die Schaltkupplung genügend lange offen zu halten. Jedoch besteht auch hier der Nachteil, daß das Schöpfrohr zeitweise ein Verlustmoment erzeugt.

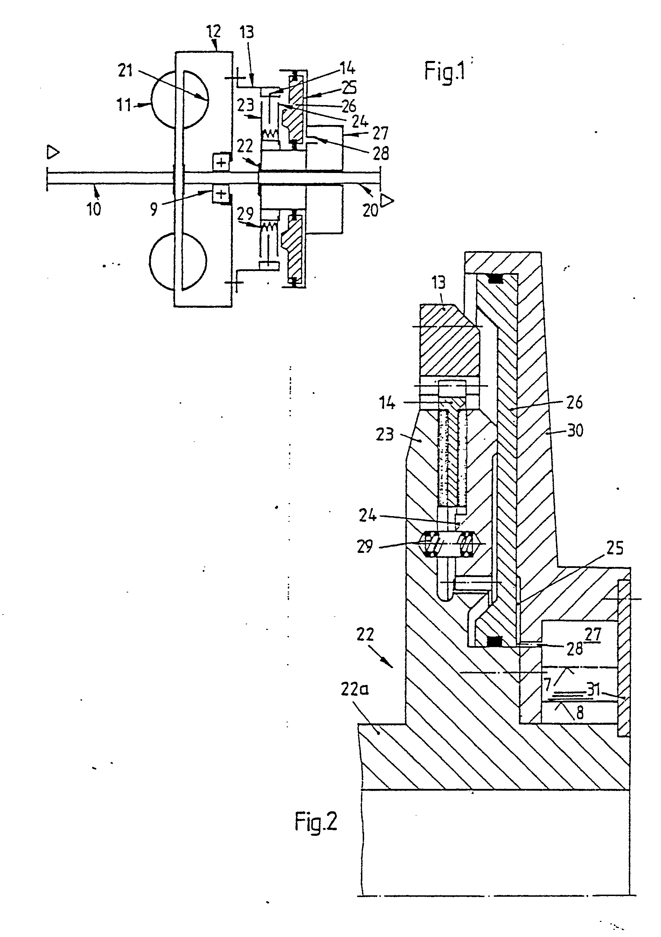

In den Figuren 2 bis 4 der Druckschrift 2 ist ein Beispiel gezeigt, das den zuvor erwähnten Nachteil zu beseitigen versucht. Hierzu muß jedoch das Schöpfrohr derart schwenkbar angeordnet werden, daß sich seine Schöpföffnung während des Anlaufvorganges des Antriebsmotors außerhalb des Flüssigkeitsringes befindet. Außerdem muß am Schöpfrohr ein Ansatz 96 vorgesehen werden, der stets in den Flüssigkeitsring eintaucht, um bei Erreichen einer bestimmten Drehzahl das Schöpfrohr in die Arbeitsstellung zu verschwenken. Ein Nachteil dieser Bauweise ist, daß sie kompliziert und störanfällig ist, und daß auch hier durch den genannten Ansatz noch ein Verlustmoment verursacht wird. Eine häufig an Schaltkupplungen dieser Art gestellte zusätzliche Forderung besteht im folgenden: Wenn die Schaltkupplung im geschlossenen Zustand rotiert und wenn hierbei die Drehzahl aus irgend einem Grunde wieder absinkt, dann soll sich die Schaltkupplung rasch öffnen. Bei den aus der Druckschrift 2 bekannten Kupplungen ist ein selbsttätiges rasches Öffnen nicht möglich. Dort kann nur die Kupplung gemäß Figur 1 und nur durch einen mechanischen Eingriff von außen entgegen dem Flüssigkeitsdruck in der Druckkammer rasch geöffnet werden (Seite 2, rechte Spalte, Zeilen 43 bis 50).

In der Druckschrift 3 ist eine Schaltkupplung beschrieben, die zur überbrückung einer hydrodynamischen Kupplung dient. Die Schaltkupplung ist dort von einer mit der einen Kupplungshälfte umlaufenden Schale umhüllt. Die Schale hat eine zur Kupplungsdrehachse konzentrische Öffnung. Im Inneren der Schale befindet sich ein Kolben, der mit der einen Kupplungshälfte rotiert und axial verschiebbar geführt ist. Der Raum zwischen der Schale und dem Kolben ist der mit Flüssigkeit füllbare Druckraum. Wenn die Schale rotiert, dann baut sich ein drehzahlabhängiger Fliehkraftdruck auf. Dieser Druck wirkt wiederum auf den Kolben, der hierdurch entgegen der Kraft einer Feder die Schaltkupplung einrückt. Zum Füllen des Druckraumes mit Flüssigkeit ist eine ein Schaltventil aufweisende Leitung von außerhalb der Kupplung in die zentrische Öffnung der Schale geführt. Zum Entleeren des Druckraumes (und damit zum Ausrücken der Schaltkupplung) ist im radial äußeren Bereich der Schale ein Schnellentleerventil vorgesehen. Ein Nachteil ist, daß die über das Schnellentleerventil entweichende Flüssigkeit außerhalb der Schaltkupplung aufgefangen und (in der Regel mittels einer Pumpe) wieder in den Druckraum gefördert werden muß. Außerdem kann das Ein- und Ausrücken der Schaltkupplung nur durch einen externen Steuerbefehl ausgelöst werden, nämlich durch Betätigen des genannten Schaltventils.

Der Erfindung liegt die Aufgabe zugrunde, eine Schaltkupplung mit den eingangs genannten Merkmalen derart auszubilden, daß bei einem Anlaufvorgang das Schließen der Kupplung in ausreichendem Maße verzögert werden kann, und zwar ohne Vornahme eines Eingriffes von außen (z.B. ohne Zuführen eines externen Steuerbefehls), und daß gleichzeitig das Auftreten eines Verlustmomentes möglichst weitgehend vermieden wird.

Zur Lösung dieser Aufgabe wurden zwei veschiedene Wege gefunden, die in den Ansprüchen 1 und 5 definiert sind. Der Anspruch 1 geht in seinem Oberbegriff vom Gegenstand der Druckschrift 1 aus. Der Anspruch 5 geht in seinem Oberbegriff vom Gegenstand der Fig. 5 der Druckschrift 2 aus.

**Zu Anspruch 1**

Bei dieser Lösung ist ein Schöpfrohr überhaupt nicht erforderlich, so daß von daher kein Verlustmoment auftritt. Dies gelingt durch Verwendung eines im achsnahen Bereich liegenden Vorratsraumes, der jedoch abweichend von Druckschrift 1 vom Schaltelement (dem in Achsrichtung beweglichen Kolben) völlig getrennt ist, so daß von daher nicht ein zu frühes Schließen der Kupplung ausgelöst wird. Durch die achsnahe Anordnung des Vorratsraumes besteht jedoch nicht mehr (wie bei Druckschrift 2) die Möglichkeit, daß sich der Druckraum bei Drehzahl-Abfall über eine radial außen liegende Öffnung entleert. Das möglichst vollkommene Entleeren des Druckraumes ist aber eine weitere wichtige Voraussetzung dafür, daß sich die Kupplung beim nächsten Anlaufvorgang nicht zu früh schließt.

Es wird nun deshalb in anderer Weise, nämlich durch die im Merkmal g) des Anspruchs 1 genannte Formgebung des Druckraumes (die bei Zylinder-Kolben-Einheiten im allgemeinen bekannt ist) für ein weitgehendes oder gar vollkommenes Entleeren des Druckraumes gesorgt, wenn die Drehzahl einen bestimmten Wert unterschreitet. Während nämlich die Flüssigkeit im Falle der Druckschrift 1 schon unter der Wirkung der restlichen Fliehkraft aus dem Druckraum strömen kann, wird sie bei der Bauweise gemäß Anspruch 1 allein durch den Kolben, der unter einer Rückstellkraft in seine Ruhelage läuft, in den Vorratsraum gedrängt. Beim nächsten Anlaufvorgang befindet sich somit anfangs höchstens eine kleine Flüssigkeitsmenge im Druckraum, so daß die Kupplung zunächst geöffnet bleibt. Erst wenn sich mit einer gewissen Verzögerung der Druckraum wieder mit Flüssigkeit füllt, ist die vom (fliehkraftabhängigen) Flüssigkeitsdruck beaufschlagte Fläche des Kolbens genügend groß, um die Rückstellkraft zu überwinden und die Kupplung zu schließen.

Das oben schon erwähnte Merkmal g) des Anspruchs 1 ist zwar schon bekannt aus der eingangs erwähnten Druckschrift 5. Die dort beschriebene Schaltkupplung unterscheidet sich jedoch vom Gegenstand des Anspruches 1 durch die folgenden Merkmale: Einerseits ist der Vorratsraum (ähnlich wie bei den Schaltkupplungen gemäß Druckschrift 2) in größerer Entfernung von der Kupplungsdrehachse angeordnet als der Druckraum (wobei der letztere in seinem radial äußeren Bereich wenigstens eine Öffnung (40) aufweist, die in den Vorratsraum mündet). Andererseits erfolgt das Steuern der Befüllung des Druckraumes mit Arbeitsflüssigkeit aus dem Vorratsraum dadurch, daß von außen her mittels einer Bandbremse (11) eine zunächst mitrotiernde Schöpfeinrichtung (13) stillgesetzt wird. Somit kann man mit dieser bekannten Schaltkupplung nicht erreichen, daß das Verzögern des Schließens der Kupplung ohne einen Eingriff von außen zustandekommt.

Durch die im Anspruch 2 beschriebene Entleerleitung wird ein besonders rasches Entleeren des Druckraumes sichergestellt und gleichzeitig vermieden, daß durch diese Leitung beim Anlaufen ein zu frühzeitiges Füllen des Druckraumes stattfindet. Der gleiche Effekt kann durch die Merkmale des Anspruches 3 erzielt werden. Durch das in der Fülleitung gemäß Anspruch 4 angeordnete Schaltventil kann erreicht werden, daß man die zeitliche Verzögerung der Befüllung des Druckraumes beliebig einstellen und bei Bedarf nachträglich ändern kann.

**Zu Anspruch 5**

Bei dieser Lösung ist gemäß Druckschrift 2 - zum Zwecke des vollständigen Entleerens des Druckraumes bei Drehzahlabfallder Vorratsraum in größerer Entfernung von der Kupplungsdrehachse angeordnet als der Druckraum, der im radial äußeren Bereich eine Austrittsöffnung hat. Es wird nun aber (abweichend von Druckschrift 2, Figuren 1 und 5) dafür gesorgt, daß das starre Schöpfrohr einen stets offenen Auslaß hat. Es wurde nämlich erkannt, daß ein mit seiner Schöpföffnung in den rotierenden Flüssigkeitsring eingetauchtes Schöpfrohr dann ein viel geringeres Verlustmoment erzeugt, wenn sein Auslaß nicht durch ein Steuerelement blockiert ist. Allerdings mußte nun eine andere Maßnahme zum Verzögern der Befüllung des Druckraumes bei Anlaufen getroffen werden: Hierzu dient das im Anspruch 5 genannte Schaltventil. Es hält beim Entleeren und insbesondere beim Anlaufen während der Verzögerungszeit die außen am Druckraum befindliche Austrittsöffnung, die einen großen Strömungsquerschnitt aufweist, offen, so daß anfangs die gesamte vom Schöpfrohr zugeführte Flüssigkeitsmenge sofort wieder abströmt. Der Druckraum füllt sich erst, wenn das Schaltventil beim Erreichen einer bestimmten Drehzahl die Austrittsöffnung verschließt. Bei der oben schon erläuterten, aus der Druckschrift 5 bekannten Schaltkupplung ist zwar schon das Merkmal vorgesehen, daß die von der Schöpfeinrichtung (13) zum Druckraum (45) führende Leitung frei von Steuerelementen ist. Jedoch ist damit die im Anspruch 5 angegebene Merkmalskombination nicht nahegelegt, weil mit dieser bekannten Kupplung aus den oben schon angegebenen Gründen die der Erfindung zugrundeliegenden Aufgabe nicht gelöst werden kann.

Aus der Druckschrift 4 ist zwar schon eine Schaltkupplung bekannt, die einen Druckraum aufweist mit einer im radial äußeren Bereich liegenden Auslaßöffnung, die mittels eines fliehkraftbetätigten Schaltventils steuerbar ist. Jedoch ist dort etwas ganz anderes beabsichtigt als bei der erfindungsgemäßen Schaltkupplung. Es soll sich nämlich bei einer Überdrehzahl das Schaltventil öffnen, um den Druckraum zu entleeren und um die Schaltkupplung zu öffnen. Im Bereich zwischen Stillstand und normaler Drehzahl ist das Schaltventil stets geschlossen. Im übrigen kann dort die Flüssigkeitszufuhr in den Druckraum nur von außen her gesteuert werden.

**Kurze Beschreibung der Zeichnungen.**

Figur 1 zeigt eine hydrodynamische Kupplung mit einer Überbrückungskupplung, die als erfindungsgemäße Schaltkupplung ausgebildet ist, schematisch im Längsschnitt;
Figur 2 zeigt einen Teillängsschnitt durch die Schaltkupplung der Figur 1 in einem gegenüber der Figur 1 vergrößerten Maßstab;
Figur 3 zeigt den Teillängsschnitt durch eine gegenüber der Figur 2 abgewandelte Bauart der Schaltkupplung;
Figur 4 zeigt einen Teillängsschnitt durch eine weitere Variante.
Wege zur Ausführung der Erfindung.
Die in Figur 1 gezeigte hydrodynamische Kupplung hat eine Primärwelle 10 mit einem Primärschaufelrad 11 und eine dazu gehörende Schale 12, ferner eine Sekundärwelle 20 und ein Sekundärschaufelrad 21. Die Schale 12 ist durch ein Wälzlager 9 auf der Sekundärwelle 20 abgestützt.
Sodann ist ein auf der Sekundärwelle (20) befestigter Kupplungskörper (22) vorgesehen. Dieser umfaßt zwei innere Kupplungsscheiben, nämlich eine starre Kupplungsscheibe (23) und eine axial bewegliche Kupplungsscheibe (24), ferner einen ringförmigen zylindrischen Druckraum (25), in dem ein zum Betätigen der Schaltkupplung dienender axial verschiebbarer Ringkolben (26) angeordnet ist. Schließlich ist an den Kupplungskörper (22) noch ein Vorratsraum (27) angebaut. Dessen lichter Durchmesser ist wesentlich kleiner als derjenige des Druckraumes (25). Der Vorratsraum (27) steht über eine (oder mehrere) gedrosselte Verbindungsleitung(en) (28) mit dem Druckraum (25) in Verbindung. Die Räume (25) und (27) sind teilweise mit einer Flüssigkeit gefüllt.

In der Ruhe halten Druckfedern (29) die Schaltkupplung geöffnet. Das Rotieren der Sekundärwelle 20 hat zur Folge, daß sich, sobald die Flüssigkeit mitrotiert, ein drehzahlabhängiger Flüssigkeitsdruck aufbaut. Dieser bewirkt ein Übertreten der Flüssigkeit vom Vorratsraum (27) in den Druckraum (25), und zwar mit einer gewissen zeitlichen Verzögerung infolge der Drosselwirkung der Verbindungsleitung (28). Im Druckraum erhöht sich der Flüssigkeitsdruck, weil hier die Flüssigkeit in einem größeren Abstand von der Drehachse rotiert. Wenn die Drehzahl genügend weit angestiegen ist und wenn demzufolge die auf den Kolben (26) wirkende Druckkraft die Rückstellkraft der Druckfedern (29) überwiegt, dann schließt der Kolben die Schaltkupplung. Fällt die Drehzahl wieder unter einen bestimmten Wert ab, dann öffnet sich die Kupplung wieder unter der Kraft der Federn (29), wobei die Flüssigkeit in den Vorratsraum zurückgedrängt wird.

Bei dem Ausführungsbeispiel nach Figur 1 wird die eine Kupplungshälfte (22 bis 29) der Schaltkupplung mit der anzutreibenden Arbeitsmaschine verbunden. In diesem Falle ist die andere Kupplungshälfte (13, 14) mit dem Antriebsmotor gekoppelt. Es gibt jedoch auch Anwendungsfälle für die erfindungsgemäße Schaltkupplung ohne die hydrodynamische Kupplung. In diesem Falle wird die eine Kupplungshälfte (22 bis 29) mit dem Antriebsmotor und die andere Kupplungshälfte (13, 14) mit der anzutreibenden Arbeitsmaschine verbunden.

Die Figur 2 zeigt eine mögliche konstruktive Gestaltung der erfindungsgemäßen Schaltkupplung von Figur 1. Alle wesentlichen Bauteile sind hier mit den gleichen Bezugszeichen versehen wie in Figur 1. Um die Fertigung der Schaltkupplung zu erleichtern, ist der Kupplungskörper (22) unterteilt in eine Kupplungsnabe (22a) und in einen "Teller" (30), der einerseits den Druckraum (25) und andererseits den Vorratsraum (27) begrenzt. Der Vorratsraum (27) ist nach außen mit einem Deckel (31) ver = schlossen. Die Schaltkupplung ist im geöffneten Zustand dargestellt. Hierbei liegt der Kolben (26) mit nahezu seiner gesamten (in der Zeichnung) rechten Stirnfläche an dem Teller (30) an, so daß die Flüssigkeit fast vollkommen in den Vorratsraum verdrängt ist. Außerdem sieht man, daß die Flüssigkeit, solange sie sich im Vorratsraum 27 befindet, nahezu vollkommen vom Kolben 26 getrennt ist. Dies bedeutet, daß der sich zu Beginn eines Anlaufvorganges im Vorratsraum 27 aufbauende Flüssigkeitsdruck fast gar nicht (d. h. nur soweit es die Drosselbohrung 28 zuläßt) auf den Kolben 26 wirken kann. Erst der sich sodann im Druckraum 25 aufbauende viel höhere Flüssigkeitsdruck bewirkt das Schließen der Schaltkupplung. Bei noch geöffneter, aber schon rotierender Schaltkupplung stellt sich im Vorratsraum 27 ein etwa bei 8 befindlicher Flüssigkeitsspiegel ein. Nach dem Schließen der Schaltkupplung liegt dann der Flüssigkeitsspiegel etwa bei 7.

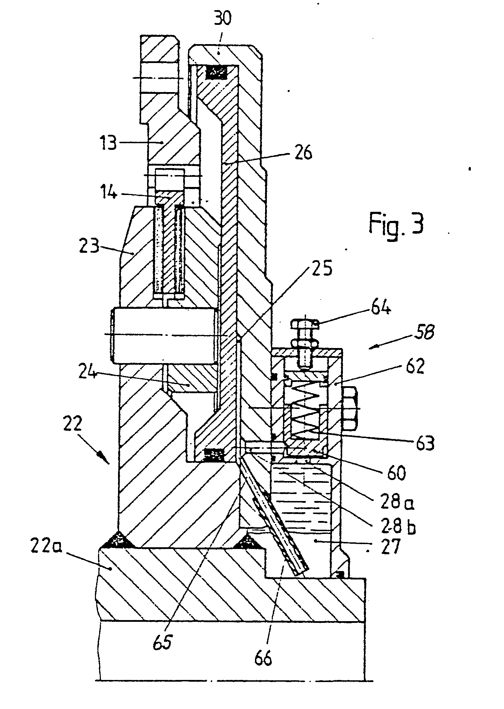

Auch in Figur 3 sind die gegenüber Figuren 1 und 2 im wesentlichen unveränderten Bauteile mit den gleichen Bezugszeichen versehen wie dort. Nicht sichtbar sind die Druckfedern 29; diese liegen außerhalb der Schnittebene. Anstelle der Drosselbohrung(en) 28 führt nunmehr vom Vorratsraum 27 zum Druckraum 25 ein ungedrosselter Füllkanal 28a, 28b. Dieser verläuft durch ein Schaltventil 58, das einen in radialer Richtung beweglichen Ventilkörper 60 aufweist. Das Schaltventil ist in einem an den Teller 30 angebauten Deckel 62 angeordnet, der zugleich den Vorratsraum 27 umschließt. Eine Feder 63 drückt den Ventilkörper 60 auf einen Ventilsitz. Wenn die am Ventilkörper angreifende Fliehkraft einen bestimmten Wert überschreitet, hebt der Ventilkörper vom Sitz ab und öffnet den Füllkanal 28a, 28b. Die Kraft der Feder 63 kann mittels einer Schraube 64 verstellt werden. Zusätzlich ist ein Entleerkanal 65 vorgesehen. Dieser ist ebenfalls ungedrosselt, aber im Gegensatz zum Füllkanal nicht steuerbar, also ständig offen. Er verläuft vom radial inneren Bereich des Druckraumes durch den Teller 30 und mit Hilfe eines Verlängerungsrohres 66 bis in den radial inneren Bereich des Vorratsraumes 27.

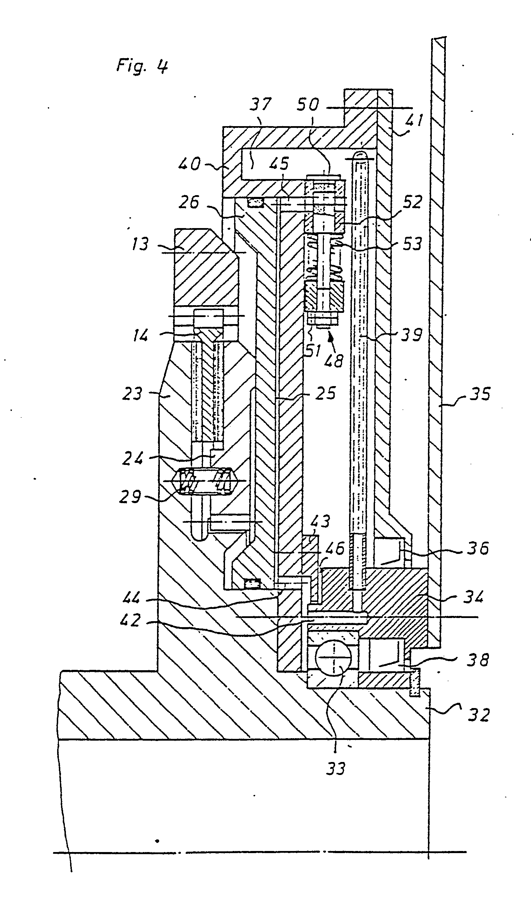

In der Figur 4 sind wiederum die gegenüber der Figur 2 unveränderten Bauteile mit den gleichen Bezugszeichen versehen wie dort. Ein erster wesentlicher Unterschied zwischen den Bauformen der Figuren 2 und 4 besteht im Folgenden: In der Figur 4 befindet sich ein wesentlicher Teil des Vorratsraumes 37 in einem Bereich, der radial weiter außen liegt als der Außenumfang des Ringkolbens 26. Dementsprechend ist der Teller 40 so geformt, daß er diesen nach außen verlagerten Vorratsraum 37 zusammen mit einem Deckel 41 umschließt.

Sodann ist in Figur 4 auf der Kupplungsnabe 32 mit Hilfe eines Wälzlagers 33 ein feststehender Ring 34 gelagert. Dieser muß mit Hilfe einer Drehmomentstütze 35 an irgendeinem in der Zeichnung nicht dargestellten feststehenden Bauteil befestigt werden. Dichtungsringe 36 und 38 schließen den Vorratsraum 37 nach außen ab. In den feststehenden Ring 34 ist ein Schöpfrohr 39 eingesetzt, das sich bis in den äußeren Bereich des Vorratsraumes 37 erstreckt.

Der Teller 40 weist im radial inneren Bereich des Druckraumes 25 eine Einlaßöffnung 44 auf und eine hierzu gehörende Fangrinne 43, sowie im radial äußeren Bereich des Druckraumes 25 eine Auslaßöffnung 45, der ein Schaltventil 48 zugeordnet ist. Beide Öffnungen 44 und 45 haben verhältnismäßig große Strömungsquerschnitte, d. h. sie sind ungedrosselt. In dem feststehenden Ring 34 befindet sich eine Fülleitung 42. Über diese steht das Schöpfrohr 39 in Leitungsverbindung mit der Fangrinne 43 und Einlaßöffnung 44. Diese Leitungsverbindung ist überdruckfrei (oder mit anderen Worten: druckentlastet), weil zwischen dem feststehenden Ring 34 und der Fangrinne 43 ein freier, nicht abgedichteter Spalt 46 vorgesehen ist.

Das Schaltventil 48 hat einen in radialer Richtung beweglichen Ventilkörper 50, an dem ein Fliehkörper 51 befestigt ist, ferner ein am Teller 40 befestigtes Ventilgehäuse 52 und eine zwischen diesem und dem Fliehkörper 51 eingespante Druckfeder 53.

Sobald der Teller 40 zusammen mit der Kupplungsnabe 32 rotiert, fördert das Schöpfrohr 39 Flüssigkeit in den Druckraum 25. Solange jedoch eine bestimmte Schaltdrehzahl noch nicht erreicht worden ist, bleibt das Schaltventil 48 geöffnet, so daß die Flüssigkeit sofort wieder aus dem Druckraum 25 entweicht. Erst nach dem Überschreiten der Schaltdrehzahl und dem Schließen des Schaltventils 48 baut sich im Druckraum 25 ein Flüssigkeitsdruck auf, der die Schaltkupplung schließt.

Nun verbleibt der wesentliche Teil der Flüssigkeit im Druckraum; die im Vorratsraum noch befindliche Flüssigkeitsmenge ist so gering, daß das Schöpfrohr 39 nur noch ganz wenig in den Flüssigkeitsring eingetaucht ist; dadurch weitere wesentliche Verringerung des Verlustmomentes!

Die Fig. 4 zeigt die Schaltkupplung in dem Zustand, in dem das Schaltventil 48 noch geöffnet ist und somit auch die Schaltkupplung selbst. In diesem Zustand befindet sich der Kolben 28 in einem gewissen Abstand vom Teller 40, damit eine Leitungsverbindung von der Einlaßöffnung 44 zur Auslaßöffnung 45 besteht. Der Abstand kann z.B. dadurch eingehalten werden, daß der Kolben 26 an seiner Stirnfläche radial verlaufende Rippen aufweist. Es wird nochmals darauf hingewiesen, daß bei den Ausführungsbeispielen gemäß Fig. 1 bis 3 ein solcher Abstand zwischen Kolben 26 und Teller 30 nicht vorhanden sein darf.

**Patentansprüche**

1. Schaltkupplung, die zwei Kupplungshälften hat, durch einen fliehkraftabhängigen Flüssigkeitsdruck betätigbar ist und die folgenden Merkmale aufweist:
a) mit der einen Kupplungshälfte (22) rotieren ein die Kupplung betätigendes Schaltelement, vorzugsweise ein in Achsrichtung verschiebbarer Kolben (26) und ein mit Flüssigkeit füllbarer Druckraum (25), in dem sich beim Rotieren der fliehkraftabhängige, im Sinne des Schließens der Schaltkupplung wirkende Flüssigkeitsdruck aufbaut;
b) in der einen Kupplungshälfte (22) ist ein Vorratsraum (27) vorgesehen, in den Flüssigkeit beim Öffnen der Schaltkupplung aus dem Druckraum (25) übertritt;
c) der Vorratsraum (27) ist vom Druckraum (25) getrennt und mit diesem über wenigstens eine Flüssigkeitsleitung (28; 28a, 28b, 65) verbunden;
d) der Vorratsraum (27) ist näher an der Kupplungsdrehachse angeordnet als der Druckraum (25), dessen radial äußerer Bereich frei von Öffnungen (d.h. gegenüber seiner Umgebung ständig abgeschlossen) ist;
e) ein ständig mit der einen Kupplungshälfte (22) rotierendes hydraulisches Steuerelement (Drossel 28, Ventil 58 oder dgl.) steuert beim Schließen der Schaltkupplung die Befüllung des Druckraumes (25) mit Flüssigkeit aus dem Vorratsraum (27);
gekennzeichnet durch die folgenden weiteren Merkmale:
f) der Vorratsraum (27) ist vom Schaltelement (26) separat angeordnet;
g) die den Druckraum (25) begrenzenden Stirnflächen sind derart aneinander angepaßt, daß das Volumen des Druckraumes bei geöffneter Schaltkupplung nahezu den Wert Null annimmt.

2. Schaltkupplung nach Anspruch 1, dadurch gekennzeichnet, daß eine vom Druckraum (25) zum radial inneren Bereich des Vorratsraumes (27) verlaufende Entleerleitung (65) vorgesehen ist.

3. Schaltkupplung nach Anspruch 1, dadurch gekennzeichnet, daß in einer den Druckraum (25) mit dem Vorratsraum (27) verbindenen Entleerleitung ein Rückschlagventil vorgesehen ist, das den Durchfluß in Richtung zum Druckraum sperrt.

4. Schaltkupplung nach Anspruch 2 oder 3, dadurch gekennzeichnet, daß in einer den Vorratsraum (27) mit dem Druckraum (25) verbindenden Fülleitung (28a, 28b) als Steuerelement ein Schaltventil (58) vorgesehen ist, das sich beim Überschreiten einer bestimmten Drehzahl öffnet.

5. Schaltkupplung, die zwei Kupplungshälften hat, durch einen fliehkraftabhängigen Flüssigkeitsdruck betätigbar ist und die folgenden Merkmale aufweist:
a) mit der einen Kupplungshälfte rotieren ein die Kupplung betätigendes Schaltelement, vorzugsweise ein in Achsrichtung verschiebbarer Kolben (26) und ein mit Flüssigkeit füllbarer Druckraum (25), in dem sich beim Rotieren der fliehkraftabhängige, im Sinne des Schließens der Schaltkupplung wirkende Flüssigkeitsdruck aufbaut;
b) in der einen Kupplungshälfte (22) ist ein Vorratsraum (37) vorgesehen, in den Flüssigkeit beim Öffnen der Schaltkupplung aus dem Druckraum (25) übertritt;
c) der Vorratsraum (37) ist vom Druckraum (25) getrennt und mit diesem über wenigstens eine Flüssigkeitsleitung (44, 45) verbunden;
d) der Vorratsraum (37) ist vom Schaltelement (26) separat angeordnet;
e) der Vorratsraum (37) hat einen größeren lichten Durchmesser als der Druckraum (25), der im radial äußeren Bereich eine Auslaßöffnung (45) aufweist, die in den Vorratsraum (37) mündet;
f) im Vorratsraum (37) ist ein feststehendes Schöpfrohr (39) zum Fördern von Flüssigkeit aus dem Vorratsraum (37) in den Druckraum (25) vorgesehen;

gekennzeichnet durch die folgenden weiteren Merkmale:

g) die vom Schöpfrohr (39) zum Druckraum (25) führende Flüssigkeitsleitung (42, 44) ist frei von Steuerelementen.

h) der Auslaßöffnung (45) ist ein Schaltventil (48) zugeordnet, das sich beim Überschreiten einer bestimmten Drehzahl schließt.

6. Schaltkupplung nach Anspruch 4 oder 5, dadurch gekennzeichnet, daß das Schaltventil (48 bzw. 58) durch Fliehkraft entgegen einer Rückstellkraft (z.B. Federkraft) betätigbar ist.

## Claims

1. Clutch assembly which has two clutch halves and which is capable of being engaged by fluid pressure depending on centrifugal force and which has the following features:

a) with one (22) of said clutch halves there rotates an actuator engaging the clutch assembly, preferably an axially movable piston (26), and a pressure chamber (25) into which fluid may be filled and in which, upon rotation, said fluid pressure depending on centrifugal torce and acting to engage the clutch assembly, is generated;

b) provided within said one clutch half (22) is a reservoir chamber (27) into which fluid enters from the pressure chamber (25) when the clutch assembly is being disengaged;

c) the reservoir chamber (24) is separate from said pressure chamber (25) and is connected to it by at least one fluid conduit (28; 28a; 28b; 65);

d) the reservoir chamber (27) is located closer to the rotational axis of the clutch assembly than the pressure chamber (25), the radially outer region of the pressure chamber 25 being free from openings, i.e. being continuously separate from its surroundings;

e) a hydraulic control element (throttle 28, valve 58 or the like) rotating continuously with said one clutch half (22) controls the flow of fluid from the reservoir chamber (27) into the pressure chamber (25) when the clutch assembly is being engaged; characterized by the following additional features:

f) the reservoir chamber (27) is arranged separately from the actuator (26);

g) the end faces confining the pressure chamber (25) match each other in such a way that the volume of the pressure chamber assumes approximately the value zero, when the clutch assembly is disengaged.

2. Clutch assembly according to Claim 1, characterized in that a draining conduit (65) is provided leading from the pressure chamber (25) to the radially inner region of the reservoir chamber (27).

3. Clutch assembly according to Claim 1, characterized in that a check valve obstructing fluid flow into the pressure chamber (25) is provided in a draining conduit which connects the pressure chamber (25) to the reservoir chamber (27).

4. Clutch assembly according to either Claim 2 or 3, characterized in that in a filling conduit (28a, 28b) connecting the reservoir chamber (27) to the pressure chamber (25) a control valve (58) is arranged acting as said control element and being adapted to open when a preselected rotational speed is exceeded.

5. Clutch assembly which has two clutch halves and which is capable of being engaged by fluid pressure depending on centrifugal force and which has the following features:

a) with one (22) of said clutch halves there rotates an actuator engaging the clutch assembly, preferably an axially movable piston (26), and a pressure chamber (25) into which fluid may be filled and in which, upon rotation, said fluid pressure depending on centrifugal force and acting to engage the clutch assembly, is generated;

b) provided within said one clutch half (22) is a reservoir chamber (37) into which fluid enters from the pressure chamber (25) when the clutch assembly is being disengaged;

c) the reservoir chamber (37) is separate from said pressure chamber (25) and is connected to it by at least one fluid conduit (44, 45);

d) the reservoir chamber (37) is arranged separately from the actuator (26);

e) the reservoir chamber (37) has a larger internal diameter than the pressure chamber (25) which has in its radially outer region an outlet opening (45), communicating with the reservoir chamber (37);

f) provided in the reservoir chamber (37) is a stationary scoop tube (39) for delivering fluid from the reservoir chamber (37) into the pressure chamber (25);

characterized by the following additional features:

g) the fluid conduit (42, 44) leading from the scoop tube (39) to the pressure chamber (25) is free from control elements;

h) a control valve (48) is allocated to the said outlet opening (45), with the control valve (48) opening when a certain rotational speed is exceeded.

6. Clutch assembly according to either Claim 4 or 5, characterized in that the control valve (48 and 68, respectively) can be actuated by centrifugal force against a restoring force (e.g. a spring force).

## Revendications

1. Embrayage à deux demi-accouplements, susceptible d'être actionné par une pression hydraulique dépendant de la force centrifuge et qui présente les caractéristiques suivantes:

a) l'un des demi-accouplements (22) est agencé pour faire tourner en même temps un élément de commande actionnant l'embrayage, préférentiellement un piston (26) coulissant dans le sens axial ainsi qu'une chambre de compression (25) pouvant être remplie de liquide et dans laquelle, lors de la rotation, s'exerce la pression hydraulique dépendant de la force centrifuge en vue d'enclencher l'embrayage;

b) dans l'un des demi-accouplements (22) est prévu un réservoir (27) dans lequel passe le liquide provenant de la chambre de compression (25) lors de l'ouverture de l'embrayage;

c) le réservoir (27) est séparé de la chambre de compression (25) et est relié à cette dernière par au moins une conduite de liquide (28; 28a, 28b, 65);

d) le réservoir (27) est monté plus proche de l'axe de rotation de l'accouplement que la chambre de compression (25) dont la zone radiale externe ne présente aucune ouverture (c'est-à-dire est continuellement fermée sur sa périphérie par rapport à son environnement);

e) un élément de commande hydraulique (vanne 28, soupape d'étranglement 58 ou autre) tournant de façon permanente en même temps que l'un des demi-accouplements (22) commande lors d'enclenchement de l'embrayage, le remplissage de la chambre de compression (25) par du liquide provenant du réservoir (27); caractérisé par les caractéristiques additionelles suivantes:

f) le réservoir (27) est monté séparé par rapport à l'élément de commande (26);

g) les surfaces frontales délimitant la chambre de compression (25) sont ajustées l'une par rapport à l'autre, de sorte que le volume de la chambre de compression présente une valeur presque nulle lorsque l'embrayage est ouvert.

2. Embrayage selon la revendication 1, caractérisé en ce qu'une conduite de vidange (65) relie la chambre de compression (25) à la zone radiale interne du réservoir (27).

3. Embrayage selon la revendication 1, caractérisé en ce qu'une soupape de non-retour est prévue dans une conduite de vidange reliant la chambre de compression (25) au réservoir (27), et ferme le passage en direction de la chambre de compression.

4. Embrayage selon la revendication 2 ou 3, caractérisé en ce qu'une soupape de commande (58) est prévue comme élément de commande, dans une conduite de remplissage (28a, 28b) reliant le réservoir (27) à la chambre de compression (25) et s'ouvre lors du dépassement d'une certaine vitesse de rotation.

5. Embrayage à deux demi-accouplements susceptible d'etre actionné par une pression hydraulique dépendant de la force centrifuge et qui présente les caractérisques suivantes:

a) l'un des demi-accouplements est agencé pour faire tourner en même temps un élément de commande actionnant l'embrayage, préférentiellement un piston (26) coulissant dans le sens axial ainsi qu'une chambre de compression (25) pouvant être remplie par un liquide dans laquelle, lors de la rotation, s'exerce la pression hydraulique dépendant de la force centrifuge en vue d'enclencher l'embrayage;

b) dans l'un des demi-accouplements (22) est prévu un réservoir (37) dans lequel passe le liquide provenant de la chambre de compression (25), lors de l'ouverture de l'embrayage;

c) le réservoir (37) est séparé de la chambre de compression (25) et est relié à cette dernière par au moins une conduite hydraulique (44, 45);

d) le réservoir (37) est monté séparé par rapport à l'élément de commande (26);

e) le réservoir (37) présente un diamètre d'alésage supérieur à celui de la chambre de compression (25), laquelle est munie d'une ouverture d'écoulement (45), située dans la zone radiale externe et débouchant dans le réservoir (37);

f) une écope (39) fixe disposée dans le réservoir (37) et est destinée au transport du liquide du réservoir (37) vers la chambre de compression (25); caractérisé par les caractéristiques suivantes:

g) la conduite hydraulique (42, 44) reliant l'écope (39) à la chambre de compression (25) ne comporte aucun élément de commande;

h) l'ouverture d'écoulement (45) est munie d'une soupape de commande (48) qui se ferme lorsqu'une certaine vitesse de rotation est dépassée.

6. Embrayage selon la revendication 4 ou 5, caractérisé en ce que la soupape de commande (48 resp. 58) soumise à la force centrifuge est actionnée en sens opposé par une force de rappel (par exemple, une force exercée par un ressort).

Fig.1

Fig.2

Fig. 3

Fig. 4